# EUROPÄISCHE PATENTANMELDUNG

(11) **EP 4 417 175 A2**
(43) Veröffentlichungstag der Anmeldung: **21.08.2024**
(21) Anmeldenummer: 24154778.5
(22) Anmeldetag: 30.01.2024
(51) Int. Cl.: A61G 3/06, B60P 1/43

(54) **LIFT-VORRICHTUNG**

(30) Priorität: 30.01.2023 DE 202023100421 U
(71) Anmelder: Bruns Holding GmbH & Co. KG, 26689 Apen (DE)
(72) Erfinder: Bruns, Gerit, 26160 Bad Zwischenahn (DE)
(74) Vertreter: Eisenführ Speiser

(57) **Zusammenfassung**

Die Erfindung betrifft eine Lift-Vorrichtung (2) für Fahrzeuge (100) für Rollstuhlfahrer, mit einer Überrollklappe (4), wobei die Überrollklappe (4) relativ zu einer Hebebühne (8) drehbar gelagert ist, einer Hebebühne (8) zum Beladen mit einer Last, einem Tragarm (10) zum Anheben und Absenken der Last in eine gewünschte Position, wobei der Tragarm (10) einen ersten Teilarm (12) und einen zweiten Teilarm (14) aufweist, die drehbar miteinander gekoppelt sind. Erfindungsgemäß ist der zweite Teilarm (14) des Tragarms (10) drehbar mit der Hebebühne (8) und der Überrollklappe (4) verbunden, und die Lift-Vorrichtung (2) ist dazu eingerichtet, die Überrollklappe (4) aus- oder einzuklappen und in mindestens einer Position zu verriegeln, wobei das Aus- oder Einklappen und das Verriegeln in Abhängigkeit der Position der Hebebühne (8) bzw. des Tragarms (10) erfolgt. Zudem ist eine Teleskopstange (16) mit einer ersten inneren Stange (20), einer zweiten äußeren Stange (21), und mit einer Feder (18) ausgebildet und ein Arretierungsmittel (22) ist vorgesehen, wobei das Arretierungsmittel (22) an der Teleskopstange (16) angeordnet und dazu eingerichtet ist, die Überrollklappe (4) zu verriegeln. Erfindungsgemäß ist ferner das Arretierungsmittel (22) als Klinke ausgebildet und die Klinke (22) bei dem Verriegeln in die Teleskopstange (16) eingreift, derart, dass die erste innere Stange (20) der Teleskopstange (16) nicht mehr relativ zur zweiten äußeren Stange (21) beweglich ist, und die innere Stange (20) der Teleskopstange (16) einen Vorsprung oder Kolben (24) aufweist, wobei die Klinke (22) bei der Verriegelung den Vorsprung oder Kolben (24) arretiert.

## Beschreibung

Die Erfindung betrifft eine Lift-Vorrichtung, insbesondere Lift-Vorrichtung für Rollstuhlfahrer, weiter insbesondere Lift-Vorrichtung für Fahrzeuge, nach dem Oberbegriff des Anspruchs 1.

Die Erfindung betrifft ferner ein Fahrzeug, insbesondere Fahrzeug zur Beförderung mobilitätsbeschränkter Personen.

Derartige Lift-Vorrichtungen weisen üblicherweise eine Hebebühne auf, die ausgebildet ist, um eine Person, insbesondere einen Rollstuhlfahrer aufnehmen und auf verschiedene Höhenniveaus bringen zu können. Die Lift-Vorrichtung des an einem Fahrzeug vorzugsweise im Heckbereich oder in einem Seitenbereich so befestigt, dass die auf einem Rollstuhl sitzende Person in das Fahrzeug hineingebracht werden kann bzw. aus diesem heraus. Zu diesem Zweck hat die Hebebühne eine hoch- und runterverfahre Plattform, die zwischen einem Bodenniveau und einem höhere Fahrzeug-Niveau verfahrbar ist. Eine solche Vorrichtung des beispielsweise aus EP 2641576 der hiesigen Anmelderin bekannt. Ähnliche Lifte sind bekannt aus US 2007/0071569 A1, US 11,504,285 B2 oder US 7,441,995 B2.

Derartige Lift-Vorrichtungen weisen typischerweise auch eine drehbar gelagerte Überrollklappe auf. Diese erfüllt zum einen die Aufgabe, während des Hebevorgangs von beispielsweise einem Rollstuhlfahrer aus einer anfänglichen Beladeposition eine sichernde Begrenzung zu bilden vorzugsweise in einer im Wesentlichen vertikalen Ausrichtung. Zum anderen wird eine Überrollklappe oftmals durch einen Mechanismus ausgeklappt, sodass in der erhöhten Einstiegsposition eine Überroll-Brücke zwischen der Plattform der Hebebühne und dem Fahrzeugboden entsteht, durch die ein Rollstuhlfahrer einfach durch Überrollen in das Fahrzeuginnere gelangt.

Lift-Vorrichtungen wie vorstehend beschrieben weisen oftmals eine Tragarm-Konstruktion auf, durch die die Plattform der Hebebühne angehoben wird. Hierbei kann der Mechanismus zur Betätigung der Überrollklappe an die Bewegung der Tragarmkonstruktion gekoppelt werden, beispielsweise über zusätzliche Armkonstruktionen, Zugseile und/oder Umlenkrollen, wobei die Überrollklappe je nach Stellung der Armkonstruktion hoch- oder runtergeklappt ist. Hierbei ist eine zuverlässige Betätigung, bei der eine Arretierung der Überrollklappe in hochgeklappter Stellung erfolgt, oftmals schwer umzusetzen.

Aufgabe der vorliegenden Erfindung ist es, eine Lift-Vorrichtung mit verbessertem Mechanismus zur Betätigung bzw. Arretierung der Überrollklappe bereitzustellen.

Die Erfindung löst die Aufgabe in einem ersten Aspekt mit einer Lift-Vorrichtung mit den Merkmalen des Anspruchs 1 , nämlich mit einer Lift-Vorrichtung für Fahrzeuge für Rollstuhlfahrer, mit einer Überrollklappe, wobei die Überrollklappe relativ zu einer Hebebühne drehbar gelagert ist, einer Hebebühne zum Beladen mit einer Last, einem Tragarm zum Anheben und Absenken der Last in eine gewünschte Position, wobei der Tragarm einen ersten Teilarm und einen zweiten Teilarm aufweist, die drehbar miteinander gekoppelt sind, und wobei der zweite Teilarm des Tragarms drehbar mit der Hebebühne und der Überrollklappe verbunden ist, wobei die Lift-Vorrichtung dazu eingerichtet ist, die Überrollklappe aus- oder einzuklappen und in mindestens einer Position zu verriegeln, wobei das Aus- oder Einklappen und das Verriegeln in Abhängigkeit der Position der Hebebühne bzw. des Tragarms erfolgt, wobei eine Teleskopstange mit einer ersten inneren Stange, einer zweiten äußeren Stange und mit einer Feder ausgebildet ist und ein Arretierungsmittel vorgesehen ist, wobei das Arretierungsmittel an der Teleskopstange angeordnet und dazu eingerichtet ist, die Überrollklappe zu verriegeln, wobei das Arretierungsmittel als Klinke ausgebildet ist und die Klinke bei dem Verriegeln in die Teleskopstange eingreift, derart, dass die erste innere Stange der Teleskopstange nicht mehr relativ zur zweiten äußeren Stange beweglich ist, und die innere Stange der Teleskopstange einen Vorsprung oder Kolben aufweist, wobei die Klinke bei der Verriegelung den Vorsprung oder Kolben arretiert.

Gemäß eines zweiten Aspektes der Erfindung wird gemäß Anspruch 2 die Aufgabe gelöst mit einer Lift-Vorrichtung für Fahrzeuge für Rollstuhlfahrer, mit einer Überrollklappe, wobei die Überrollklappe relativ zu einer Hebebühne drehbar gelagert ist, einer Hebebühne zum Beladen mit einer Last, einem Tragarm zum Anheben und Absenken der Last in eine gewünschte Position, wobei der Tragarm einen ersten Teilarm und einen zweiten Teilarm aufweist, die drehbar miteinander gekoppelt sind, und wobei der zweite Teilarm des Tragarms drehbar mit der Hebebühne und der Überrollklappe verbunden ist, wobei die Lift-Vorrichtung dazu eingerichtet ist, die Überrollklappe aus- oder einzuklappen und in mindestens einer Position zu verriegeln, wobei das Aus- oder Einklappen und das Verriegeln in Abhängigkeit der Position der Hebebühne bzw. des Tragarms erfolgt, wobei die Verriegelung der Überrollklappe bewirkt wird aufgrund einer Gewichtsbalance eines Bauteils, welches ein Drehmoment auf das Bauteil ausübt, welches ein Arretierungsmittel zum Verriegeln der Überrollklappe in einer Verriegelungsstellung in die Verriegelungsstellung bewegt und/oder vorspannt.

Gemäß diesem Aspekt der Erfindung wird ein Bauteil so ausbalanciert und vorzugsweise drehbar so gelagert, dass aufgrund einer Gewichtskraft ein Arretierungsmittel in eine Verriegelungsstellung gedrängt oder vorgespannt wird und dadurch die Überrollklappe in einer Verriegelungsstellung arretiert wird. Insbesondere ist das Bauteil drehbar gelagert und ein Drehmoment wird durch die Gewichtsbalance auf das Bauteil erzeugt, welches das Arretierungsmittel in eine Verriegelungsstellung vorspannt.

Gemäß einer bevorzugten Weiterbildung wird vorgeschlagen, dass die Lift-Vorrichtung eine Zugstange aufweist, die dazu eingerichtet ist, in Abhängigkeit der Ausrichtung des Tragarms das Arretierungsmittel zu betätigen. Bevorzugt wird die Gewichtsbalance vorgenommen dadurch, dass das Bauteil ein Anschlag mit einem Gleiter ist, der drehbar mit der Teleskopstange und der Zugstange verbunden ist und über einen Stab drehbar mit dem zweiten Teilarm des Tragarms verbunden ist, wobei der Anschlag mit dem Gleiter an dem ersten Teilarm des Tragarms anliegt und durch Veränderung des Winkels zwischen den beiden Teilarmen des Tragarms eine Kraft auf die Zugstange überträgt, wodurch das Arretierungsmittel betätigt wird.

Bevorzugt ist es ferner, dass der Gleiter mittels eines Drehgelenks drehbar oder schwenkbar an der Teleskop-Stange, insbesondere dessen obere, äußere Stange befestigt ist, sodass der Gleiter in verschiedenen Drehstellung in relativ zu dem Tragarm positioniert werden kann.

Die Gewichtsbalance zum Vorspannen des Arretierungsmittels bzw. der Klinke in eine Verriegelungsstellung wird ferner dadurch besonders bevorzugt hergestellt, dass ein Teilabschnitt des Gleiters auf einer Seite des Drehgelenks länger und/oder schwerer ausgestaltet als ein gegenüberliegender Teilabschnitt des Gleiters.

Gemäß einer bevorzugten Weiterbildung der Erfindung ist das Arretierungsmittel als Klinke ausgebildet.

Nach einer weiteren Ausführungsform der Erfindung greift die Klinke bei dem Verriegeln in die Teleskopstange ein, derart, dass die innere Stange der Teleskopstange nicht mehr relativ zur äußeren Stange beweglich ist. Hierdurch erfolgt eine selbsthemmende Verriegelung mit geringem Verschleiß an dem Arretierungsmittel bzw. der Klinke.

Nach einer bevorzugten Weiterbildung der Erfindung weist die innere Stange der Teleskopstange einen Kolben auf, wobei die Klinke bei der Verriegelung den Kolben arretiert. Hierbei greift die Klinke nicht in ein Loch innerhalb der inneren Stange der Teleskopstange, sondern wird an die äußere Kontur des Kolbens angelegt, wodurch die Zuverlässigkeit der Arretierung erhöht werden kann.

Gemäß einer weiteren bevorzugten Ausführungsform der Erfindung weist die Lift-Vorrichtung eine Zugstange auf, die dazu eingerichtet ist, in Abhängigkeit der Ausrichtung des Tragarms das Arretierungsmittel zu betätigen. Über die Zugstange kann die notwendige mechanische Koppelung mit den Tragarmen eingerichtet werden, in deren Abhängigkeit das Arretierungsmittel die Teleskop-Stange und somit die Überrollklappe ver- oder entriegelt.

Gemäß einer bevorzugten Weiterbildung der Erfindung weist die Lift-Vorrichtung einen Anschlag mit einem Gleiter auf, der drehbar mit der Teleskopstange und der Zugstange verbunden ist und über einen Stab drehbar mit dem zweiten Teilarm des Tragarms verbunden ist, wobei der Anschlag mit dem Gleiter an dem ersten Teilarm des Tragarms anliegt und durch Veränderung des Winkels zwischen den beiden Teilarmen des Tragarms eine Kraft auf die Zugstange überträgt, wodurch das Arretierungsmittel betätigt wird. Wird die Hebebühne durch den Tragarm abgesenkt, vergrößert sich der Winkel zwischen den Tragarmen und der Gleiter bewegt sich entlang der Oberfläche des oberen Teilarms. Dies bewirkt die Entstehung einer Zugkraft auf die Zugstange, wodurch die Klinke betätigt und die Überrollklappe verriegelt wird.

Nach einer weiteren Ausführungsform der Erfindung weist die Lift-Vorrichtung einen Handgriff zum Festhalten für die zu hebende Person bzw. den zu hebenden Gegenstand auf, der gegenüber dem Stab und dem zweiten Teilarm des Tragarms in dem Befestigungspunkt des Stabes an dem zweiten Teilarm des Tragarms begrenzt drehbar befestigt ist. Der Handgriff dient der Sicherung beispielsweise einer in einem Rollstuhl sitzenden Person.

Gemäß einer bevorzugten Weiterbildung der Erfindung weist die Lift-Vorrichtung eine Überrollklappenführung auf, die drehbar mit der Teleskopstange und der Überrollklappe verbunden ist.

Nach einer weiteren Ausführungsform der Erfindung weist die Überrollklappenführung ein Langloch auf und ist über das Langloch mit der Teleskopstange verbunden. Dabei kann eine Schraubenverbindung oder eine andersartige Verbindung entlang des Langlochs gleiten während der Bewegung der Lift-Vorrichtung bzw. der Überrollklappe.

Die Überrollklappenführung ermöglicht eine genaue Führung des Aus- und Einklappens der Überrollklappe.

Die Erfindung betrifft in einem zweiten Aspekt ein Fahrzeug, insbesondere Fahrzeug zur Beförderung mobilitätsbeschränkter Personen, mit einer Lift-Vorrichtung, insbesondere Lift-Vorrichtung für Rollstuhlfahrer, mit einer Überrollklappe, einer Hebebühne zum Beladen mit einer Last, wobei die Überrollklappe mit der Hebebühne drehbar verbunden ist, einem Tragarm zum Anheben der Last in eine gewünschte Position, wobei der Tragarm einen ersten Teilarm und einen zweiten Teilarm aufweist, die drehbar miteinander verbunden sind, und wobei der zweite Teilarm des Tragarms drehbar mit der Hebebühne und der Überrollklappe verbunden ist, wobei die Lift-Vorrichtung dazu eingerichtet ist, die Überrollklappe aus- oder einzuklappen und zu verriegeln, wobei das Aus- oder Einklappen und das Verriegeln in Abhängigkeit der Position der Hebebühne bzw. des Tragarms erfolgt.

Die Erfindung löst die Aufgabe bei einem Fahrzeug gemäß dem zweiten Aspekt, indem die Lift-Vorrichtung nach mindestens einem der vorstehenden Ansprüche ausgebildet ist.

Die Erfindung wird nachfolgend unter Bezugnahme auf die beigefügten Figuren anhand von bevorzugten Ausführungsbeispielen näher beschrieben. Hierbei zeigt:
- Fig.1: eine schematische Darstellung einer erfindungsgemäßen Ausführungsform der Lift-Vorrichtung in einer perspektivischen Gesamtansicht mit einem schematisch angedeuteten typischen Fahrzeug, an dem die Lift-Vorrichtung befestigbar und im Betrieb befestigt ist;
- Fig.2: eine schematische Darstellung einer erfindungsgemäßen Ausführungsform der Lift-Vorrichtung in einer seitlichen Ansicht
- Fig.3: eine schematische Detaildarstellung von Komponenten einer erfindungsgemäßen Ausführungsform der Lift-Vorrichtung in einer ersten Betätigungsposition in einer perspektivischen Ansicht;
- Fig.4: eine schematische Detaildarstellung der in Fig.3 gezeigten Komponenten in einer zweiten Betätigungsposition in einer ersten perspektivischen Ansicht;
- Fig.5: die in Fig.4 gezeigten Komponenten in der zweiten Betätigungsposition in einer zweiten perspektivischen Ansicht;
- Fig.6: die in Fig.4 gezeigten Komponenten in der zweiten Betätigungsposition in einer perspektivischen Detailansicht im Bereich der äußeren Teleskopstange;
- Fig.7: die in Fig.4 gezeigten Komponenten in einer perspektivischen Schnittansicht;
- Fig.8: einen Detailausschnitt der in Fig.7 gezeigten Komponenten im Bereich der Klinke;
- Fig.9: eine schematische Darstellung einer erfindungsgemäßen Ausführungsform der Lift-Vorrichtung in einer ersten Stellung in einer seitlichen Ansicht;
- Fig.10: eine schematische Darstellung der in Fig.9 gezeigten Lift-Vorrichtung in einer perspektivischen Ansicht;
- Fig.11: eine schematische Darstellung einer erfindungsgemäßen Ausführungsform der Lift-Vorrichtung in einer zweiten Stellung in einer seitlichen Ansicht;
- Fig.12: eine schematische Darstellung der in Fig.11 gezeigten Lift-Vorrichtung in einer perspektivischen Ansicht;
- Fig.13: eine schematische Darstellung einer erfindungsgemäßen Ausführungsform der Lift-Vorrichtung in einer dritten Stellung in einer seitlichen Ansicht;
- Fig.14: eine schematische Darstellung der in Fig.13 gezeigten Lift-Vorrichtung in einer perspektivischen Ansicht;
- Fig.15: eine schematische Darstellung einer erfindungsgemäßen Ausführungsform der Lift-Vorrichtung in einer vierten Stellung in einer seitlichen Ansicht;
- Fig. 16: eine schematische Darstellung der in Fig.15 gezeigten Lift-Vorrichtung in einer perspektivischen Ansicht;
- Fig.17: eine schematische Darstellung einer erfindungsgemäßen Ausführungsform der Lift-Vorrichtung in einer fünften Stellung in einer seitlichen Ansicht;
- Fig.18: eine schematische Darstellung der in Fig.17 gezeigten Lift-Vorrichtung in einer perspektivischen Ansicht;
- Fig.19: eine schematische Darstellung einer erfindungsgemäßen Ausführungsform der Lift-Vorrichtung in einer sechsten Stellung in einer seitlichen Ansicht;
- Fig.20: eine schematische Darstellung der in Fig.19 gezeigten Lift-Vorrichtung in einer perspektivischen Ansicht;
- Fig. 21: eine zweite erfindungsgemäße Ausführungsform der Lift-Vorrichtung in einer Seitenansicht, bei der ein Gleiter aufgrund seiner Gewichtsbalance ein Drehmoment erfährt;
- Fig. 22: die Ausführungsform gemäß Figur 21 in einer perspektivischen Ansicht;
- Fig. 23: die Ausführungsform gemäß Figur 21 in einer Teilansicht mit Gleiter und Stange;
- Fig. 24: eine Seitenansicht der Ausführungsform gemäß Figur 21 in einer Stellung mit verschwenktem Gleiter; und
- Fig. 25: eine perspektivische Ansicht der Ausführungsform gemäß Figur 21.

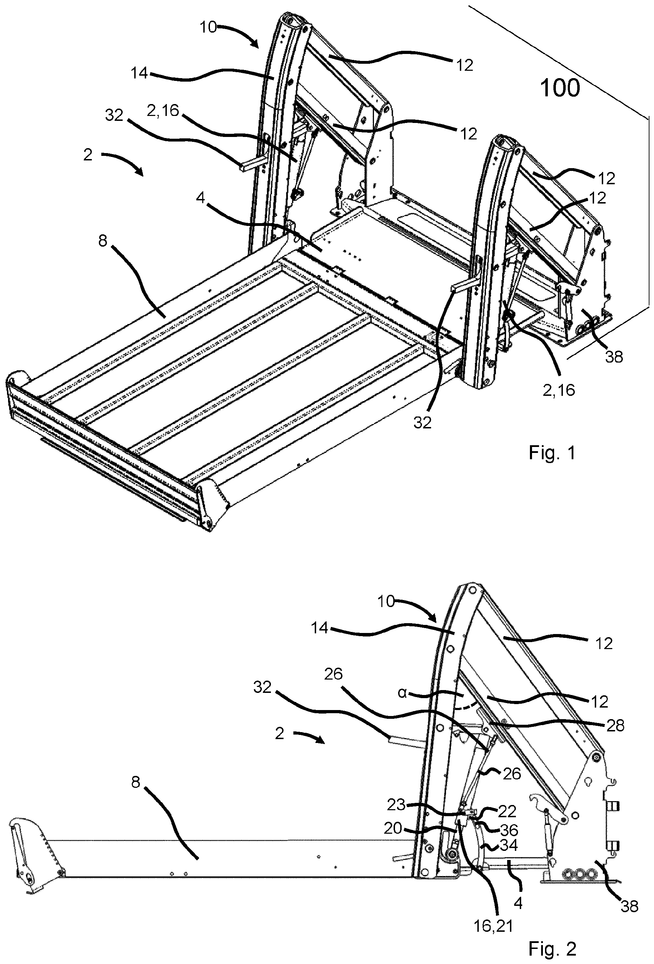

Fig.1 zeigt eine erfindungsgemäße Ausführungsform der Lift-Vorrichtung 2 mit einer Überrollklappe 4 und einer Plattform oder Hebebühne 8 zum Beladen mit einer Last, insbesondere für eine in einem Rollstuhl sitzende Person. Die Lift-Vorrichtung 2 ist in typischer Weise an einem Fahrzeug 100 befestigt, vorzugsweise im Heckbereich. Das erfindungsgemäße Fahrzeug 100 mit daran befestigter Lift-Vorrichtung 2 ist hier nur schematisch dargestellt, da an sich bekannt.

Die Überrollklappe 4 ist drehbar gelagert, im Ausführungsbeispiel mit der Hebebühne 8 drehbar verbunden. Die Überrollklappe 4 dient dazu, einerseits in einer im Wesentlichen horizontalen Anordnung eine Brücke zu bilden zwischen der Hebebühne 8 und dem Fahrzeug 100, sodass ein Rollstuhl mit einer Person dort gut entlang transportiert werden kann, andererseits dient die Überrollklappe 4 dazu, dient die Überrollklappe 4 in vertikaler oder schräg gestellter, verriegelter Position als Barriere, um ein Herunterrollen des Rollstuhls von der Hubplattform während der Hub-Senk-Bewegung des Liftes zu verhindern. Die Verriegelung soll sicherstellen, dass dies auch bei höheren Belastungen durch z.B. E-Rollstühle gewährleistet ist. In dieser letztgenannten Position soll die Überrollklappe 4 auch sicher positioniert oder verriegelt werden, damit sie nicht ungewollt herunterfällt.

Ein betätigbarer Tragarm 10 ist zum Anheben der auf der Hebebühne 8 positionierten Last in eine gewünschte Position vorgesehen, wobei der Tragarm 10 im Ausgangsbeispiel mehrteilig ausgebildet ist und einen ersten Teilarm 12 und einen zweiten Teilarm 14 aufweist, die drehbar miteinander verbunden sind, und wobei der zweite Teilarm 14 des Tragarms 10 drehbar mit der Hebebühne 8 und der Überrollklappe 4 verbunden ist. Die Lift-Vorrichtung 2 ist dazu eingerichtet, die Überrollklappe 4 aus- oder einzuklappen und zu verriegeln, wobei das Aus- oder Einklappen und das Verriegeln in Abhängigkeit der Position der Hebebühne 8 bzw. des Tragarms 10 erfolgt. Der Tragarm 10 ist als Parallelogramm-Gestänge ausgebildet und wird in nicht näher gezeigter und an sich bekannter Weise mittels eines Hydraulikzylinders oder dergleichen angetrieben, um die Hebebühne 8 anheben oder absenken zu können insoweit wird beispielsweise verwiesen auf das US Patent 9,814,635 der Anmelderin, dessen Inhalt vollumfänglich durch Bezugnahme in dieser Offenbarung inkludiert wird, insbesondere hinsichtlich der Betätigung des Tragarmes.

Die Lift-Vorrichtung 2 weist weiterhin eine Teleskopstange 16 auf, wobei eine erste Stange 20 relativ zu dieser axial bewegbare zweite Stange 21 vorgesehen sind. Zudem weist die Lift-Vorrichtung 2 Handgriffe 32 auf. Der Tragarm 10 ist über eine Lagerung 38 mit der Fahrzeugstruktur des Fahrzeugs 100 verbunden (siehe Figur 1).

Fig.2 verdeutlicht weitere Komponenten der in Fig.1 gezeigten Lift-Vorrichtung 2. Die Teleskop-Stange 16 weist eine erste, vorzugsweise innere Stange 20 und eine zweite, vorzugsweise äußere Stange 21 auf. An der Teleskop-Stange 16 ist der Arretierungsmittel- bzw. Klinkenhalter 23 mit der Klinke 22 drehbar befestigt. An dem Klinkenhalter 23 befestigt ist die Zugstange 26, die zudem mit einem Anschlag mit einem Gleiter 28 verbunden ist. Die Überrollklappenführung 34 mit dem Langloch 36 ist ebenfalls an der Teleskop-Stange 16 drehbar befestigt. Anliegend an dem oberen Teilarm 12 befindet sich der Anschlag 28 mit dem Gleiter 28.

Der Gleiter 28 kann auch als Gleitschuh bezeichnet werden. Er kann in Kontakt gebracht werden mit dem Teilarm 12 des Tragarms 10 und an dessen Oberfläche entlanggleiten. Ferner ist der Gleiter 28 mittels eines Drehgelenks 29 drehbar oder schwenkbar an der Teleskop-Stange 16, insbesondere dessen obere, äußere Stange 21 befestigt, sodass der Gleiter 28 in verschiedenen Drehstellung in relativ zu dem Tragarm 10 positioniert werden kann.

Wird die Hebebühne 8 mittels Betätigung des Tragarms 10 durch einen Hydraulikzylinder oder dergleichen mit dem ersten Teil Arm 12 bzw. zweiten Teilarm 14 abgesenkt, verändert sich der Winkel α zwischen den Tragarmen 12 und 14 und der Anschlag mit dem Gleiter 28 erzeugt bei der Drehbewegung eine Zugkraft an dem Zugstab 26. Hierdurch kommt es zu einer Drehbewegung des Klinkenhalters 23, wodurch wiederum die Klinke 22 näher an die Verrieglungsposition geführt wird, bei der die Klinke 22 die innere Stange 20 der Teleskop-Stange 16 verriegelt. Bei einem Anheben der Hebebühne 8 erfolgt der gegenteilige Effekt. Damit kann also der Tragarm 10 verriegelt werden derart, dass die Überrollklappe 4 in ihrer passiven, im Wesentlichen vertikalen oder schrägen Stellung positioniert und fixiert oder verriegelt wird, also in einer Verrieglungsposition.

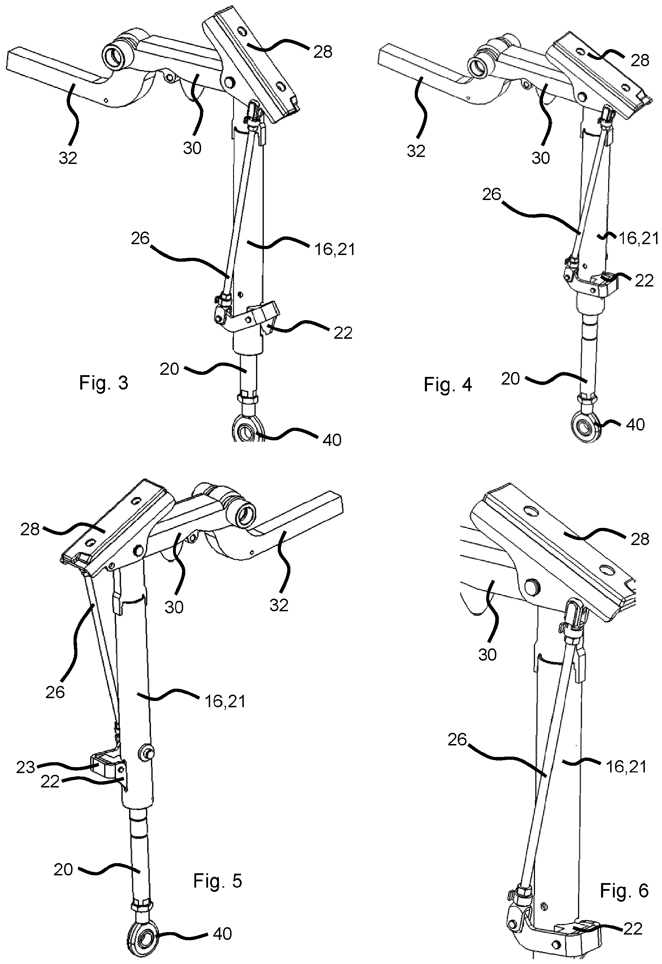

In Fig.3 werden der genaue Aufbau und die Verbindungen von Komponenten der erfindungsgemäßen Lift-Vorrichtung 2 aus Fig.1 gezeigt. Zu sehen ist die Teleskop-Stange 16 mit der inneren Stange 21 und der äußeren Stange 22, der Anschlag mit Gleiter 28, die Zugstange 26, die Klinke 22 und der Handgriff 32. Der Anschlag mit Gleiter 28 weist eine drehbare Verbindung zum einen mit der äußeren Stange 21 der Teleskopstange 16 und zum anderen, in dem gleichen Befestigungspunkt, eine drehbare Verbindung zu einem Stab 30 auf, der wiederum drehbar mit dem ersten Teilarm 14 des Tragarms 10 verbunden ist. Der Stab 30 kann als Komponente einer Wippe, die sich in Abhängigkeit der Winkelstellung der Teilarme 12 und 14 zueinander ausrichtet, angesehen werden. Mit dem Stab 30 verbunden ist ebenfalls der Handgriff 32, der an demselben Befestigungspunkt des Stabes 30 an dem zweiten Teilarm 14 drehbar befestigt ist. Neben dem vorstehend beschriebenen Befestigungspunkt an dem Anschlag mit Gleiter 28 weist dieser weiterhin einen Befestigungspunkt mit der Zugstange 26 auf. Zur Befestigung der inneren Stange 20 der Teleskop-Stange 16 an der Hebebühne 8 weist erstere ein Schraubaugen-ähnliches Befestigungselement 40 auf.

Die Funktionsweise und Struktur der Vorrichtung 2 und des Mechanismus der Ver- und Entriegelung wird anhand der Figuren 3 bis 8 weiter verdeutlicht.

So zeigt Fig. 4 die in Fig.3 dargestellten Komponenten in einer Verriegelungsposition der Klinke 22. Dazu wurde über die Teilarme 12 und 14 die (Dreh-) Position des Anschlags mit Gleiter 28 verändert, sodass eine Zugkraft auf die Zugstange 26 gewirkt hat, wodurch wiederum der Klinkenhalter 23 gedreht und die Klinke 22 in die entsprechende Verriegelungsposition geführt wurde.

Fig.5 zeigt die in Fig.4 dargestellte Verriegelungsposition in einer zweiten Perspektive, bei der der Eingriffspunkt der Klinke 22 deutlicher wird. In Fig. 6 wird die Befestigung und Funktionsweise der Zugstange nochmals vergrößert dargestellt.

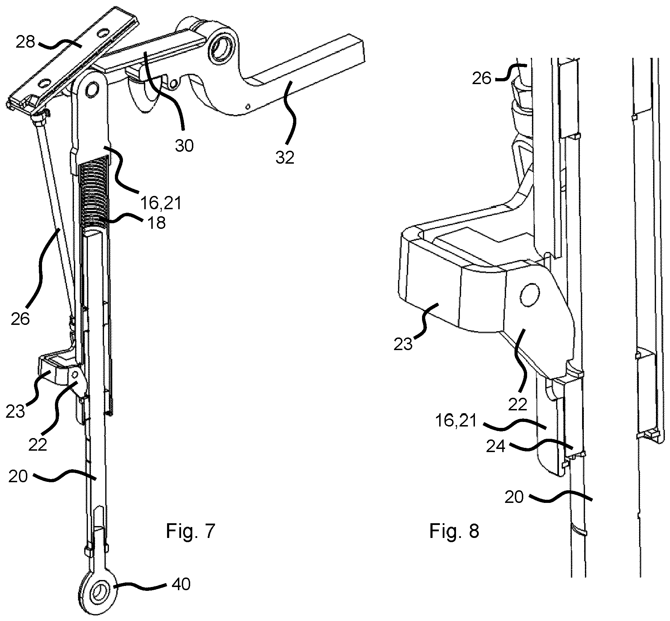

Fig.7 zeigt eine Schnittansicht der in Fig.4 gezeigten Komponenten mit der Teleskop-Stange 16 und mit der Teleskop-Stange 16 verbundene Komponenten. Innerhalb der Teleskop-Stange 16 ist Feder 18 angeordnet, die eine Druckkraft auf die innere Stange 20 der Teleskop-Stange 16 ausübt. An der inneren Stange 20 befestigt ist das Schraubaugenähnliche Befestigungselement 40. Ebenfalls verdeutlicht wird die Anordnung des Handgriffs 32 zum Stab 30. Der Stab 30 ist als Hohlprofil ausgebildet, wobei der Handgriff 32 teilweise innerhalb des Hohlprofils liegt.

Fig. 8 verdeutlicht den Aufbau der in Fig.4 gezeigten Lift-Vorrichtung 2 im Bereich der Klinke 22. In die äußere Stange 21 der Teleskop-Stange 16 teilweise eingeschoben ist die innere Stange 20, wobei an der inneren Stange 20 ein Kolben 24 befestigt ist. Das Profil der Klinke 22 ist derart ausgebildet, dass die Klinke beim Verriegeln an den Kolben 24 angelegt wird. In dieser Verriegelungsposition werden somit der Kolben 24 und die innere Stange 20 daran gehindert, eine nach oben gehende Bewegung auszuführen, wodurch wiederum ein Einschieben der inneren Stange 20 in die Teleskop-Stange 16 und folglich ein Ausklappen der Überrollklappe 4 durch Bewegung der Überrollklappenführung 34 vermieden wird.

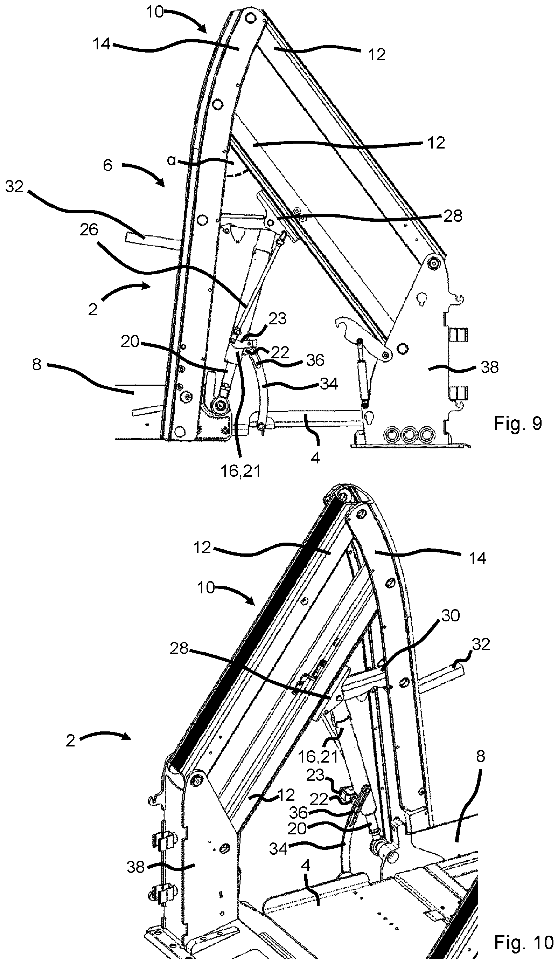

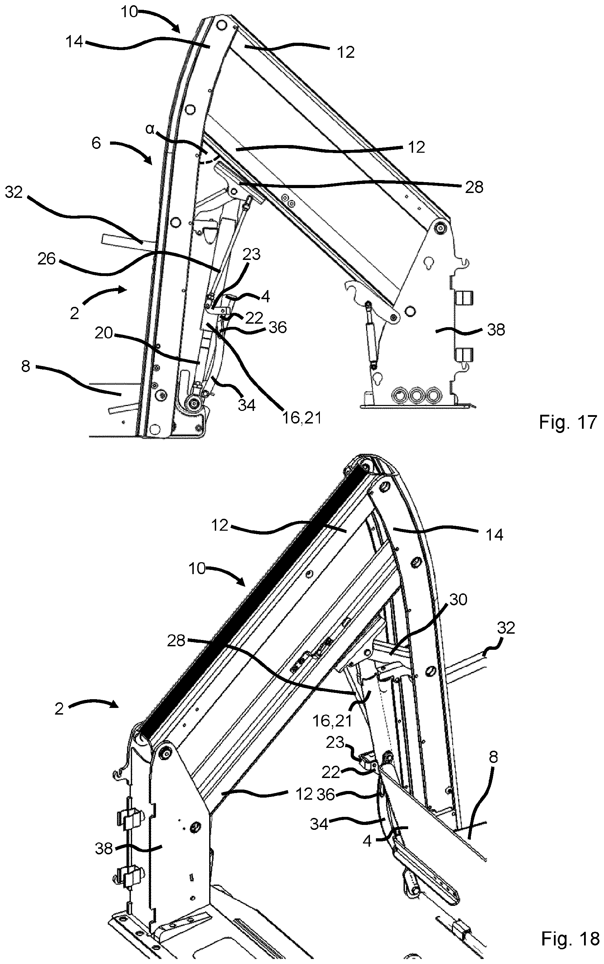

Der Bewegungsablauf bei der Verriegelung durch die Klinke 22 ist in den Figuren 9 bis 20 nochmals verdeutlicht. Hierbei werden verschiedene Positionen/Stellungen der Hebebühne 8, des Tragarms 10 bzw. der Lift-Vorrichtung 2, beginnend in einer oberen Position mit ausgeklappter Überrollklappe 2, jeweils aus zwei Perspektiven gezeigt.

In Fig. 9 und Fig. 10 befindet sich die Lift-Vorrichtung 2 in der oberen Position, wobei die Überrollklappe 4 ausgeklappt ist und eine Brücke bildet zwischen der Hebebühne 8 und dem Fahrzeug 100. Somit kann in dieser Position beispielsweise ein Rollstuhlfahrer in das Innere des Fahrzeugs 100 gelangen. Weiterhin ist zu erkennen, dass sich die Klinke 22 durch die Zugstange 26 in einer entriegelten Stellung befindet. Die innere Stange 20 ist vergleichsweise tief in die äußere Stange 21 des Teleskop-Stange 16 eingeschoben, sodass die Überrollklappenführung 34 die ausgeklappte Position der Überrollklappe 4 ermöglicht. Der Anschlag mit dem Gleiter 28 liegt in dieser Position vollflächig an dem oberem Teilarm 12 an. Die Teilarme 12 und 14 bilden einen Winkel α, der hier vergleichsweise klein ist.

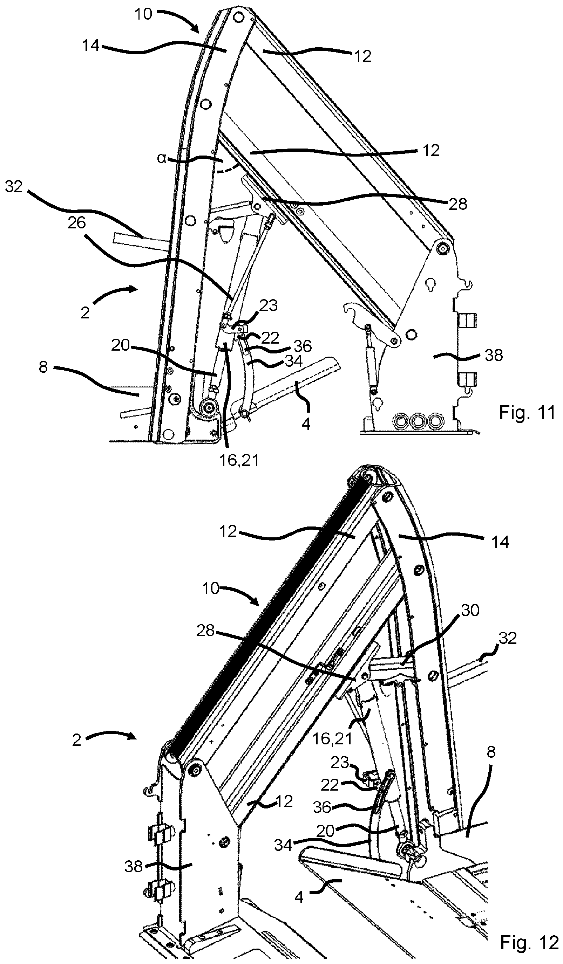

Fig.11 und Fig.12 zeigen eine Stellung während des beginnenden Absenkungsvorgangs der Lift-Vorrichtung 2. Da sich der Winkel α zwischen den beiden Teilarmen 12 und 14 hier gegenüber der vorherigen Stellung aus Fig. 9 und Fig. 10 vergrößert hat, ist zum einen die innere Stange 20 weiter aus der äußeren Stange 21 herausgezogen, sodass die Überrollklappenführung 34 hier beginnt, die Überrollklappe 4 einzuklappen. Gleichzeitig kommt es durch die Drehbewegung insbesondere des oberen Teilarms zu einer Dreh- und Gleitbewegung des Anschlags mit Gleiter 28, wobei durch die Gleitbewegung und das Drehen um den Befestigungspunkt zwischen dem Anschlag mit Gleiter 28 und der äußeren Stange 21 und dem Stab 30 eine Zugkraft auf die Zugstange 26 ausgeübt wird. Hierdurch beginnt das Drehen des Klinkenhalters 23 und die Betätigung der Klinke 22 bzw. der Verriegelungsvorgang.

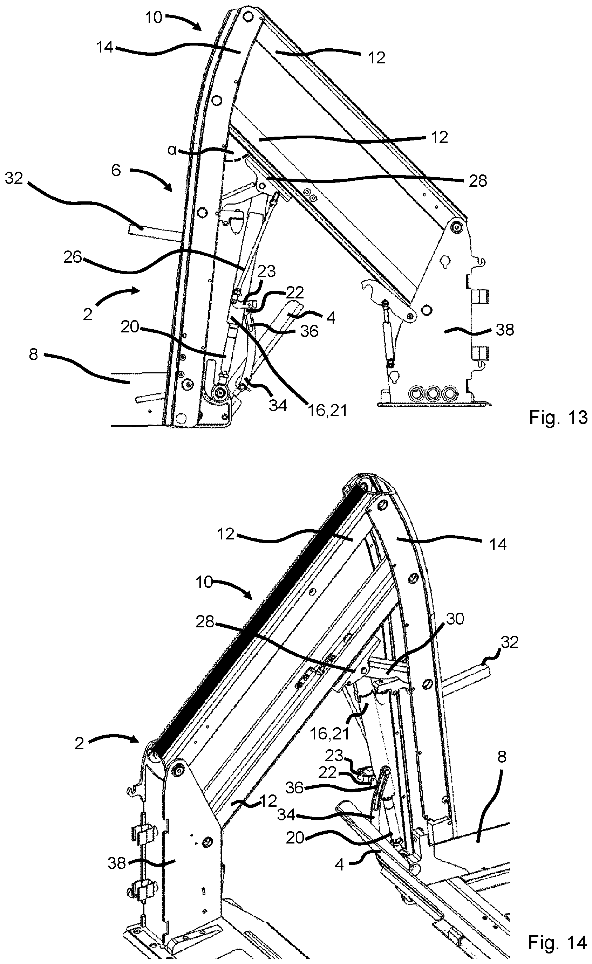

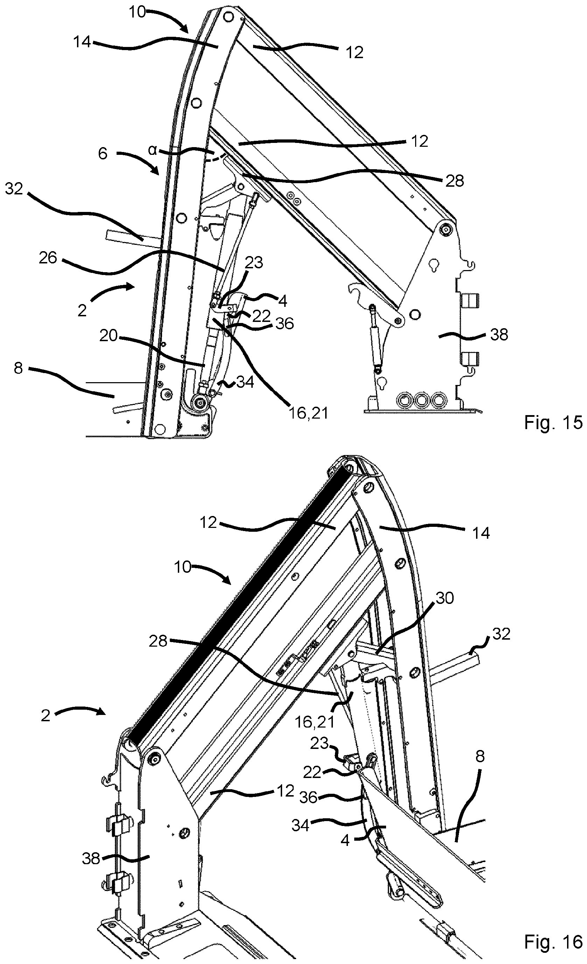

In Fig. 13 und Fig. 14, Fig. 15 und Fig. 16 sowie Fig. 17 und Fig. 18 wächst der Winkel α stetig an, während die Hebebühne 8 weiter abgesenkt wird. In Fig.15 und Fig.16 ist die Überrollklappe 4 von der Überrollklappenführung 34 eingeklappt worden, während die innere Stange 20 maximal weit herausgezogen ist. Da die innere Stange 20 der Teleskop-Stange 16 in Fig.15 und Fig.16 nicht weiter herausgezogen werden kann, kommt es zu einem partiellen Ablösen des Kontaktes des Anschlags mit Gleiter 28 von der Oberfläche des oberen Teilarms 12 beim weiteren Absenken der Hebebühne. Hierbei erfolgt ein weitergehendes Drehen des Anschlags mit Gleiter 28 um den beschriebenen Befestigungspunkt mit der Teleskop-Stange 16 und dem Stab 30 und es wirkt weiterhin eine Zugkraft auf die Zugstange 26. Hierdurch wird die Klinke 22 weitergehend an die Verriegelungsposition herangeführt/herangedreht.

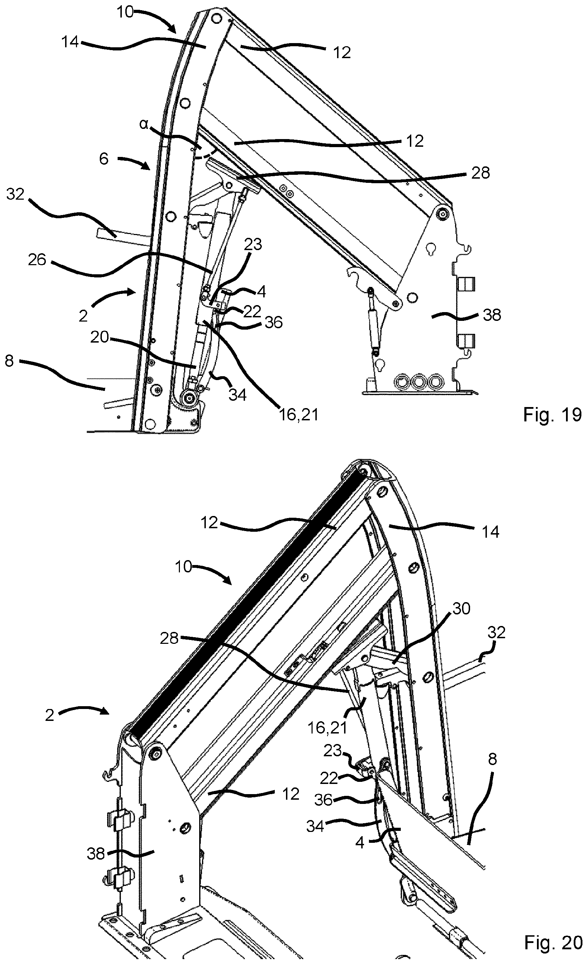

Die Verriegelungsposition ist in Fig.19 und Fig.20 erreicht. Hierbei ist erkennbar, dass sich der Anschlag mit Gleiter 28 weiter von der Oberfläche des Teilarms 12 weggedreht und um den beschriebenen Befestigungspunkt herumgedreht hat. Hierdurch befindet sich die Klinke 22 in der Verrieglungsposition.

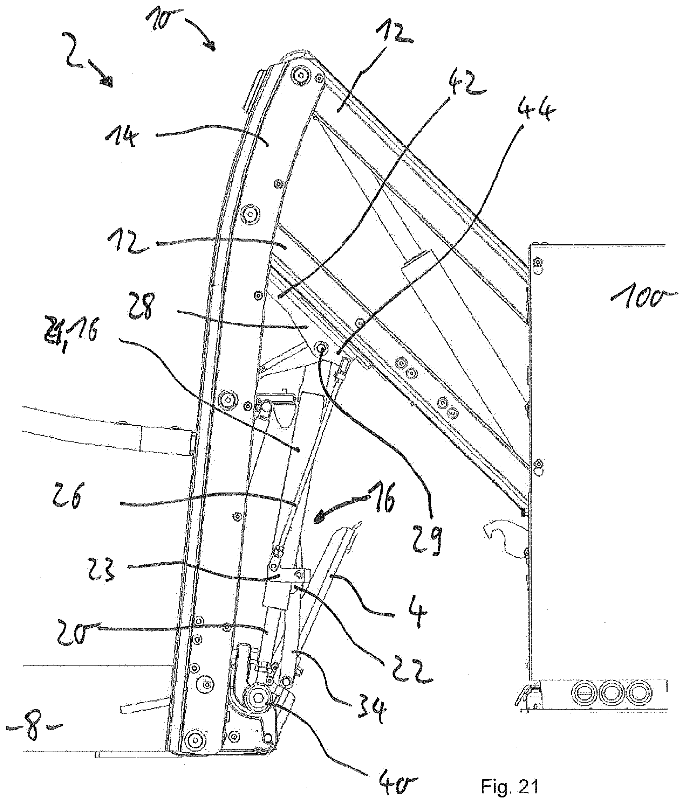

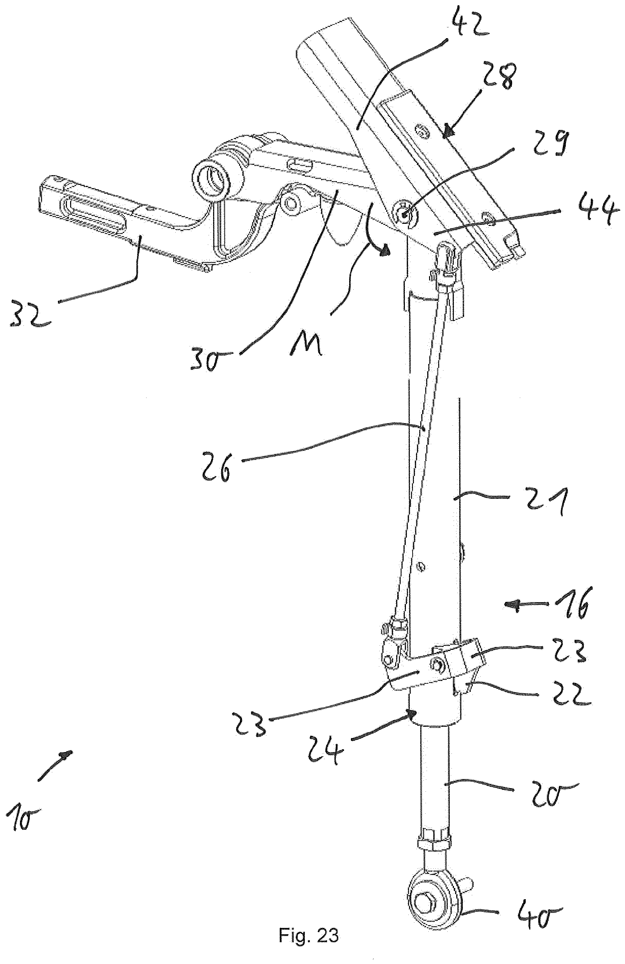

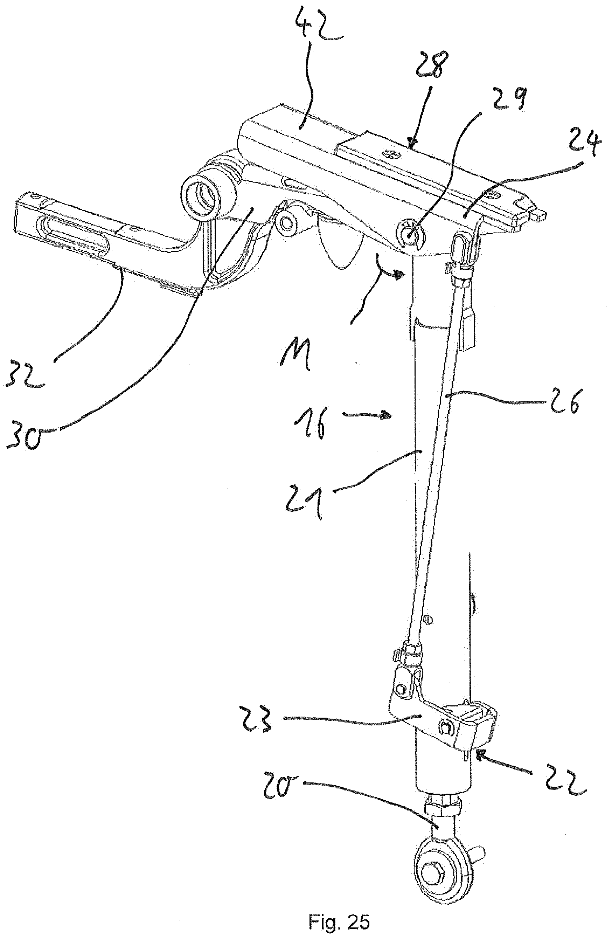

Das in Fig. 21 gezeigte zweite Ausführungsform der Lift-Vorrichtung entspricht im Wesentlichen dem 1. zuvor beschriebenen Ausführungsbeispiel, und zur Beschreibung seiner Struktur und Funktionsweise wird vollumfänglich auf die obigen Beschreibungen Bezug genommen. Nachfolgend werden im Wesentlichen Unterschiede gegenüber dem ersten Ausführungsbeispiel beschrieben. Der Gleiter 28, der mittels des Drehgelenks 29 drehbar oder verschwenkt gelagert ist an der Teleskop-Stange 16, insbesondere dessen oberen äußeren Stange 21. Der Gleiter 28 kann ebenfalls als Gleitschuh bezeichnet werden und kann in Kontakt gebracht werden mit dem Teilarm 12 des Tragarms 10 und an dessen Oberfläche entlanggleiten. Ferner ist der Gleiter 28 mittels eines Drehgelenks 29 drehbar oder schwenkbar an der Teleskop-Stange 16, insbesondere dessen obere, äußere Stange 21 befestigt, sodass der Gleiter 28 in verschiedenen Drehstellung in relativ zu dem Tragarm 10 positioniert werden kann. Der Gleiter 28 erfährt, wenn er nicht in Kontakt ist mit dem Tragam 10 aufgrund seiner Gewichtsbalance ein Drehmoment, da er so gestaltet ist, dass das Gewicht auf einer Seite größer ist als auf der anderen Seite des Drehgelenks 29. Wie die Figuren zeigen, ist ein Teilabschnitt 42 auf einer Seite des Drehgelenk 29 länger und/oder schwerer ausgestaltet als ein gegenüberliegender Teilabschnitt 44. Aufgrund der Gewichtsbalance des Gleiter 28 und damit aufgrund einer Gewichtskraft entsteht also ein Drehmoment M (Fig. 23, 24 und 25) auf den Gleiter 28, wenn der Gleiter 28 freikommt von dem Tragarm 10. Aufgrund der Kopplung des Gleiter 28 mit der Stange oder Zugstange 26 wird dann das Arretierungsmittel 22, genauer gesagt die Klinke 22 in eine Verriegelungsstellung gebracht oder vorgespannt derart, dass dadurch die Überrollklappe 4 in der Verriegelungsstellung gesichert ist und nicht herunterfällt.

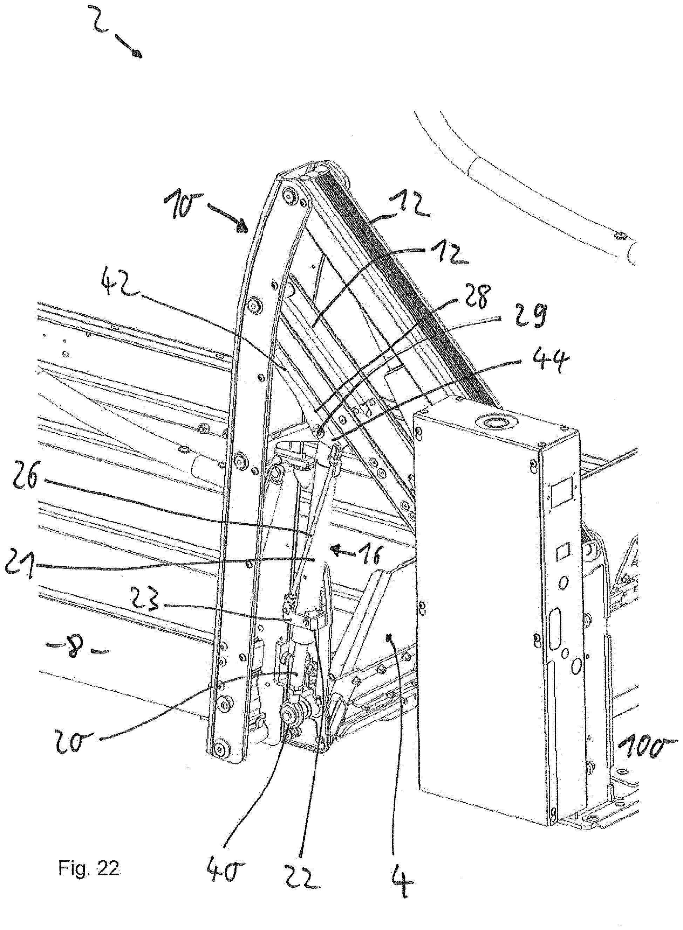

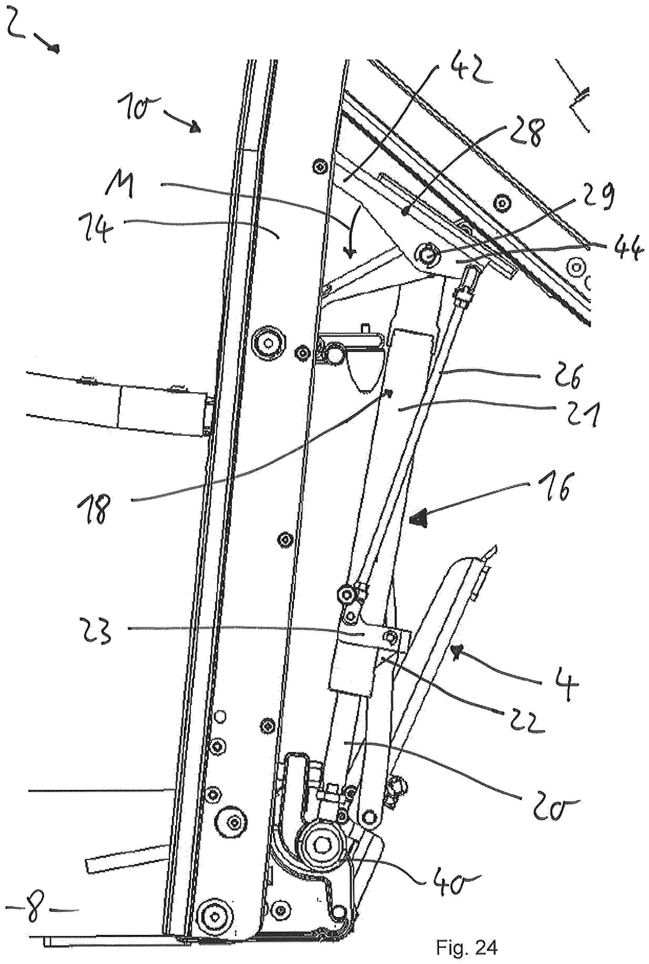

Wie insbesondere Figuren 22 - 25 veranschaulichen, ist der Teilabschnitt 42 des Gleiter 28 länger ausgestaltet und ragt weiter nach außen heraus von dem Drehgelenk 29 als der Teilabschnitt 44 des Gleiters 28, sodass ein Drehmoment M entsteht, in den gezeigten Figuren entgegen dem Uhrzeigersinn, wie durch Pfeil M gezeigt. Neben der Länge kann auch eine größere Masse in dem Teilabschnitt 42 untergebracht sein als in dem Teilabschnitt 44 oder kann auch ein Material mit einer höheren Dichte angeordnet sein, beispielsweise ein Metall mit einer hohen Dichte wie z.B. auch Blei; dies kann sein, muss aber nicht zwingend so sein. Auch die geometrische Gestaltung allein könnte ausreichen, um ein Drehmoment M, im Ausführungsbeispiel entgegen dem Uhrzeigersinn in den gezeigten Figuren, zu erzeugen, welches dazu führt, dass aufgrund der Kopplung mit der Stange 26 die an dem Klinkenhalter 23 angeordnete Klinke 22 in die Verriegelungsstellung gebracht wird, sodass die Teleskop-Stange 16 verriegelt ist dadurch, dass die Stangen 20 und 21 in ihrer Relativbewegung zueinander gehindert sind, sodass letztlich die Überrollklappe 4 verriegelt ist in der oberen, passiven Verriegelungsstellung, wie in den Figuren 21 und 24 gezeigt.

### Bezugszeichenliste

- 2: Lift-Vorrichtung
- 4: Überrollklappe
- 8: Plattform oder Hebebühne
- 10: Tragarm
- 12: Erster Teilarm des Tragarms
- 14: Zweiter Teilarm des Tragarms
- 16: Teleskop-Stange
- 18: Feder
- 20: Innere Stange (der Teleskop-Stange)
- 21: Äußere Stange (der Teleskop-Stange)
- 22: Arretierungsmittel/Klinke
- 23: Arretierungsmittel-/Klinkenhalter
- 24: Vorsprung oder Kolben (der inneren Stange (der Teleskop-Stange))
- 26: Zugstange
- 29: Drehgelenk
- 28: Anschlag mit einem Gleiter
- 30: Stab
- 32: Handgriff
- 34: Überrollklappenführung
- 36: Langloch
- 38: Lagerung des Tragarms an der Fahrzeugstruktur
- 40: Befestigungselement der inneren Stange (der Teleskop-Stange)
- 100: Fahrzeug
- α: Winkel zwischen den Teilarmen des Tragarms
- 42: Teilabschnitt des Gleiters 28
- 44: Teilabschnitt des Gleiters 28
- M: Dreh-Moment

## Patentansprüche

1. Lift-Vorrichtung (2) für Fahrzeuge (100) für Rollstuhlfahrer, mit einer Überrollklappe (4), wobei die Überrollklappe (4) relativ zu einer Hebebühne (8) drehbar gelagert ist,
einer Hebebühne (8) zum Beladen mit einer Last,
einem Tragarm (10) zum Anheben und Absenken der Last in eine gewünschte Position, wobei der Tragarm (10) einen ersten Teilarm (12) und einen zweiten Teilarm (14) aufweist, die drehbar miteinander gekoppelt sind,
und wobei der zweite Teilarm (14) des Tragarms (10) drehbar mit der Hebebühne (8) und der Überrollklappe (4) verbunden ist,
wobei die Lift-Vorrichtung (2) dazu eingerichtet ist, die Überrollklappe (4) aus- oder einzuklappen und in mindestens einer Position zu verriegeln, wobei das Aus- oder Einklappen und das Verriegeln in Abhängigkeit der Position der Hebebühne (8) bzw. des Tragarms (10) erfolgt,
**dadurch gekennzeichnet, dass**
eine Teleskopstange (16) mit einer ersten inneren Stange (20), einer zweiten äußeren Stange (21), und mit einer Feder (18) ausgebildet ist und
ein Arretierungsmittel (22) vorgesehen ist, wobei das Arretierungsmittel (22) an der Teleskopstange (16) angeordnet und dazu eingerichtet ist, die Überrollklappe (4) zu verriegeln,
wobei das Arretierungsmittel (22) als Klinke ausgebildet ist und die Klinke (22) bei dem Verriegeln in die Teleskopstange (16) eingreift, derart, dass die erste innere Stange (20) der Teleskopstange (16) nicht mehr relativ zur zweiten äußeren Stange (21) beweglich ist, und die innere Stange (20) der Teleskopstange (16) einen Vorsprung oder Kolben (24) aufweist, wobei die Klinke (22) bei der Verriegelung den Vorsprung oder Kolben (24) arretiert.

2. Lift-Vorrichtung (2) für Fahrzeuge (100) für Rollstuhlfahrer, mit
einer Überrollklappe (4), wobei die Überrollklappe (4) relativ zu einer Hebebühne (8) drehbar gelagert ist,
einer Hebebühne (8) zum Beladen mit einer Last,
einem Tragarm (10) zum Anheben und Absenken der Last in eine gewünschte Position, wobei der Tragarm (10) einen ersten Teilarm (12) und einen zweiten Teilarm (14) aufweist, die drehbar miteinander gekoppelt sind,
und wobei der zweite Teilarm (14) des Tragarms (10) drehbar mit der Hebebühne (8) und der Überrollklappe (4) verbunden ist,
wobei die Lift-Vorrichtung (2) dazu eingerichtet ist, die Überrollklappe (4) aus- oder einzuklappen und in mindestens einer Position zu verriegeln, wobei das Aus- oder Einklappen und das Verriegeln in Abhängigkeit der Position der Hebebühne (8) bzw. des Tragarms (10) erfolgt,
wobei die Verriegelung der Überrollklappe (4) bewirkt wird aufgrund einer Gewichtsbalance eines Bauteils, welches ein Drehmoment auf das Bauteil ausübt, welches ein Arretierungsmittel (22) zum Verriegeln der Überrollklappe (4) in einer Verriegelungsstellung in die Verriegelungsstellung bewegt und/oder vorspannt.

3. Lift-Vorrichtung nach Anspruch 1 und / oder 2, **dadurch gekennzeichnet, dass**
die Lift-Vorrichtung eine Zugstange (26) aufweist, die dazu eingerichtet ist, in Abhängigkeit der Ausrichtung des Tragarms (10) das Arretierungsmittel (22) zu betätigen.

4. Lift-Vorrichtung nach Anspruch 3, **gekennzeichnet durch**
das Bauteil ein Anschlag mit einem Gleiter (28) ist, der drehbar mit der Teleskopstange (16) und der Zugstange (26) verbunden ist und über einen Stab (30) drehbar mit dem zweiten Teilarm (14) des Tragarms (10) verbunden ist,
wobei der Anschlag mit dem Gleiter (28) an dem ersten Teilarm (12) des Tragarms (10) anliegt und durch Veränderung des Winkels (α) zwischen den beiden Teilarmen (12,14) des Tragarms (10) eine Kraft auf die Zugstange (26) überträgt, wodurch das Arretierungsmittel (22) betätigt wird.

5. Lift-Vorrichtung nach Anspruch 4,
**dadurch gekennzeichnet, dass** der Gleiter (28) mittels eines Drehgelenks (29) drehbar oder schwenkbar an der Teleskop-Stange (16), insbesondere dessen obere, äußere Stange (21) befestigt ist, sodass der Gleiter 28 in verschiedenen Drehstellung in relativ zu dem Tragarm 10 positioniert werden kann.

6. Lift-Vorrichtung nach Anspruch 5,
**dadurch gekennzeichnet, dass** ein Teilabschnitt 42 des Gleiters 28 auf einer Seite des Drehgelenks 29 länger und / oder schwerer ausgestaltet als ein gegenüberliegender Teilabschnitt 44 des Gleiters 28.

7. Lift-Vorrichtung nach mindestens einem der vorstehenden Ansprüche, **gekennzeichnet durch**
einen Handgriff (32) zum Festhalten für die zu hebende Person bzw. die zu hebende Last, der gegenüber dem Stab (30) und dem zweiten Teilarm (14) des Tragarms (10) in dem Befestigungspunkt des Stabes (30) an dem zweiten Teilarm (14) des Tragarms (10) begrenzt drehbar befestigt ist.

8. Lift-Vorrichtung nach einem der vorstehenden Ansprüche, **gekennzeichnet durch** eine Überrollklappenführung (34), die drehbar mit der Teleskopstange (16) und der Überrollklappe (4) verbunden ist.

9. Lift-Vorrichtung nach Anspruch 8, **dadurch gekennzeichnet, dass** die Überrollklappenführung (34) ein Langloch (36) aufweist und über das Langloch (36) mit der Teleskopstange (16) verbunden ist.

10. Fahrzeug (100), insbesondere Fahrzeug zur Beförderung mobilitätsbeschränkter Personen, mit einer Lift-Vorrichtung (2), insbesondere Lift-Vorrichtung für Rollstuhlfahrer, mit
einer Überrollklappe (4), wobei die Überrollklappe (4) relativ zu einer Hebebühne (8) drehbar gelagert ist,
einer Hebebühne (8) zum Beladen mit einer Last,
einem Tragarm (10) zum Anheben und Absenken der Last in eine gewünschte Position, wobei der Tragarm (10) einen ersten Teilarm (12) und einen zweiten Teilarm (14) aufweist, die drehbar miteinander gekoppelt sind,
und wobei der zweite Teilarm (14) des Tragarms (10) drehbar mit der Hebebühne (8) und der Überrollklappe (4) verbunden ist,
wobei die Lift-Vorrichtung (2) dazu eingerichtet ist, die Überrollklappe (4) aus- oder einzuklappen und in mindestens einer Position zu verriegeln, wobei das Aus- oder Einklappen und das Verriegeln in Abhängigkeit der Position der Hebebühne (8) bzw. des Tragarms (10) erfolgt,
**dadurch gekennzeichnet, dass**
die Lift-Vorrichtung (2) nach mindestens einem der vorstehenden Ansprüche 1 - 9 ausgebildet ist.
